## Europäisches Patentamt
## European Patent Office
## Office européen des brevets

(19)

(11) Publication number: **0 001 963**
**B1**

(12) **EUROPEAN PATENT SPECIFICATION**

(45) Date of publication of patent specification: **17.11.82**

(51) Int. Cl.³: **C 04 B 43/02, D 04 H 1/00**

(21) Application number: **78850018.9**

(22) Date of filing: **03.11.78**

(54) Method and apparatus for manufacture of shaped pieces of mineral wool.

(30) Priority: **09.11.77 SE 7712654**

(43) Date of publication of application:
**16.05.79 Bulletin 79/10**

(45) Publication of the grant of the patent:
**17.11.82 Bulletin 82/46**

(84) Designated Contracting States:
**BE CH DE FR GB NL**

(56) References cited:
**DE - C - 841 727
DE - C - 1 221 002
FR - A - 1 073 587
GB - A - 470 675
GB - A - 648 380
US - A - 2 003 319
US - A - 3 341 890**

(73) Proprietor: **ROCKWOOL AKTIEBOLAGET**
**Fack 615**
**S-541 86 Skövde (SE)**

(72) Inventor: **Oehberg, Ingemar**
**Hentorpsvägen 41**
**S-541 00 Skövde (SE)**

(74) Representative: **Avellan-Hultman, Olle**
**Jungfrugatan 16**
**S-102 46 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Process and apparatus for manufacturing of mould pieces of mineral wool

The present invention relates to a process for continuously manufacturing mould pieces of mineral wool having a substantially constant cross-section along the entire length thereof.

Mineral wool is mainly manufactured as useful for insulating purposes. Almost any type of mineral wool is impregnated by a binder and is shaped to more or less complicated paths, whereupon the binder is made stiff by a heat treatment. Mostly thermosetting resins are used as binders, especially phenolic plastics. Apart for such basically plane products as plates, discs, felt and mats are manufactured to a relatively large extent so called pipe jackets, i.e. hollow cylinders used for isolating of pipes. Finally there is a small but increasing manufacture of other shaped objects like isolating valve jackets, ceilings for motor cars and any other special products. The said products are manufactured by being form moulded generally by providing mineral wool impregnated with a binder in moulds, which are thereafter pressed together while being heated, so that the mineral wool by means of the binder is fixed with the intended shape.

The main part of all pipe jackets are manufactured in that a thin layer of mineral wool which is impregnated by a binder is wound on a core or a mandrel. The mineral wool which is wound on the core is thereafter subjected to heat with or without having an outer mould. The heat may be supplied in that the mineral wool provided on the core is introduced into a heat chamber and is slowly heated until the binder gets stiff or that a hollow, perforated core is used from which hot gases are pressed out through the mineral wool wound on the core, so that the mineral wool is thereby heated and the binder gets stiff and the mineral wool layer keeps the shape which it has been given.

Aside of the said main method there are basically three further methods. The first and most elementary way is to cut pipe jackets out of plates or discs. This can mainly be made in two different ways, either by punching or cutting out annular portions which are piled to form a pipe jacket, or by directly cutting the pipe jacket out of a plate of mineral wool by means of band saws which by sawing form the inner and outer surfaces of the pipe jacket. The band saws may work parallelly with the axis of the pipe jacket, but it is also possible to use circular band saw blades which act perpendicularly to the said axis. The second method is an actual press moulding. In a metal mould having the pipe jacket form mineral wool is introduced, whereupon the mould is closed and is heated together with the mineral wool. Later a pipe jacket can be taken out from the mould, generally, however, only in the form of a half cylindrical pipe jacket.

In later days also a method has been introduced, in which a pipe jacket is manufactured continuously. Mineral wool in the form of a path which is impregnated by a binder is fed into a pipe which is formed by two or several transport conveyors which are formed to a cylinder. In the centre of the said cylinder there is a fixed core, and the mineral wool path is fed into the area between the cylinder and the core. After a heat treatment a pipe jacket is received at the opposite end.

For the completeness it should also be mentioned that pipe jackets have been manufactured in that a mineral wool layer is screw formed wound onto a core and is thereafter hardened. Also this method gives an endless pipe jacket as a final product.

Also the present invention relates to a continuous manufacture of shaped pieces of mineral wool, for instance pipe jackets. Differing from most previously known methods the method suggested according to the invention is particularly suited for small pipe jackets, i.e. pipe jackets intended for pipes having small diameters. There is today a large demand for pipe jackets for isolating of pipes having diameters down towards 10 mm. If previously isolated at all such pipes or tubes have been isolated by winding a mineral wool mat round the pipe. Differing from the above related methods for manufacture of pipe jackets the present invention, however, has a substantially wider field of use, viz. in that the invention can be utilized for manufacture of shaped pieces of mineral wool having a substantially constant cross-section form. Apart from the products, the cross-section form of which is completely constant along the entire product it is also possible according to the invention to manufacture products by means of simple supplementary operations, in which there are minor differences in cross-section form like bevelled edges, cavities etc. along the length of the product.

The main object of the invention is to provide a process and an apparatus for continuously manufacturing mould pieces of mineral wool, in which the process has some features in common with extrusion or injection moulding. Thus the process is characterized in that

a mat of mineral wool impregnated or mixed with a binder and used as a starting material in the process is broken up (by 4, 5) into flocks or granules,

the flocks or granules of mineral wool are maintained substantially free flowing in the air,

the shaping of the mineral wool and the hardening of the binder follows in a channel, at one end of which the flocks or granules of mineral wool including the non-hardened binder are introduced, in that the flocks or granules of mineral wool are sucked into the channel by means of a flow of air, or in that the flocks or granules of mineral wool are supplied to the feeding end of the channel and within the compression area of a compressing means by one or more reciprocatable feeders acting at an angle to the axial direction of the compressing means,

the flocks or granules are compressed while being successively advanced in the channel by the compressing means,

the binder of the compressed string of mineral wool provided in the channel is hardened, and

the ready string of mineral wool is expelled and is cut and finished into mould pieces.

The apparatus according to the invention is characterized in that it comprises in combination a means for impregnating or mixing a mat of mineral wool with a binder, a means for breaking up the impregnated mineral wool mat into flocks and/or granules, a means for advancing the flocks or granules thereby provided, a feeding chamber in which the flocks or granules of mineral wool are collected, one or more formation channels each having a cross-section area which is less than that of the feeding chamber and which corresponds to the cross-section form of the mould piece to be manufactured, a compressing means adapted to feed and compress the flocks or granules of mineral wool in the formation channel or channels providing one or more strings of mineral wool, means for providing a flow of air, or one or more reciprocatable acting at an angle to the axial direction of the compressing means, for introducing the flocks and/or granules of mineral wool into the said formation channel or channels, and means for providing a hardening of the binder in the string or strings of mineral wool.

It is known from Swedish patent 304,712 to make flocks of mineral wool as intended with the invention. Such flocks have been made in connection to manufacture of board, and the purpose of making flocks has been to finely distribute the mineral wool so that the mineral wool can be recollected to a path which is more homogeneous than the original mineral wool path which is fed into the flock making apparatus. When making flocks the binder is also more evenly distributed in the mineral wool, and it is also a great advantage to add new or additional binder during the flock making. When making flocks the original mineral wool path is split up at the places where there is only little binder. Such portions which have relatively little amount of binder thereby form the outer layer of the flocks. By adding further binder to the mineral wool the said binder is received on the areas where there was originally a low content of binder.

A problem which easily appears in connection to working with flocks of mineral wool is connected to the fact that the flocks do not appear as a free running mass. On the contrary the flocks have a tendency to stick together on the first possible opportunity to become a more or less integral mass. It may thereby be difficult to bring the flocks into the channel in which they are to be compressed by the compressing means to an integral, compressed string of mineral wool. In such case it may be possible to granulate the flocks for instance by introducing the flocks at one end of a rotating drum. When leaving the drum at the opposite end the flocks are thereby more nodulated and having more free running properties.

Another possibility is to suck the flocks into the channel by means of an air flow. Different types of feeders may also be used, whereby especially reciprocating pistons have proved to be useful. Also screws can be used for feeding the flocks into the channel. If screws are used they are of course not allowed to enter the working area of the compressing means, but if alternatively a feeder of the reciprocating type is used the feeder may advantageously enter a free working area of the compressing means in its extended position so that the flocks fed by the feeder are taken care of by the compressing means after the feeder is withdrawn and the flocks are pressed into the channel. This is, however, not absolutely necessary, but on the other hand it is necessary that the feeders work at an angle to the operative direction of the piston. The front end position of the feeders are also located outside of the working area of the compressing means. If sucking the flocks into the channel by an air flow it is advantageous to provide the air flow circulating. The air flow is withdrawn through openings in the channel walls and is by a suction fan brought back into the mass of flocked wool. From there the same air supporting new flocks is sucked into the channel.

The air which by the suction fan is returned to the flocked mineral wool helps the flocks to keep moving thereby preventing the flocks from baking together. It should be foreseen that the holes in the channel walls are not too wide so that the air which is withdrawn through said holes is substantially free from flocks of mineral wool.

When manufacturing unsymmetrical mould pieces, i.e. such mould pieces in which different parts of the cross-section includes different large amounts of mineral wool it has proved possible to vary the distribution of the amount of mineral wool of the channel by distributing the total area of the air withdrawal holes of the channel walls differently. At those places where a large amount of mineral wool is wanted more holes or possibly larger holes are provided than at other places.

Preferably a piston or a conical screw is used as compressing means. If a piston is used it is of course necessary that the force by which the piston presses the mineral wool into the channel is sufficient for pressing the entire body of mineral wool further into the channel. Thereby the degree of compression that the mineral wool obtains depends on the friction between the channel and the body of mineral wool when moving the said body in the channel. If only a slight degree of compression is wanted the channel walls should be parallel or slightly diverging substantially along the entire length of the channel. For the products manufactured according to the invention it is, however, not necessary to provide the channel diverging at all. On the contrary it has proved suitable to provide a converging portion at some place between the end position of the piston in the channel and the location of the means for hardening the binder, and preferably the convergency of the said converging portion is made adjustable. If the convergency is made large a strong resistance is provided against the feeding of the mineral wool in the channel what gives a high degree of compression and a high density of the product thereby obtained. The conditions are the oppositely if the convergency is only slight. Since it is always a wish to restrict the variations of density it is now possible within the scope of the invention to control the density by controlling the convergency of the said converging portion of the channel. This can also be made automatically either by directly reading the density, for instance by automatically checking the weight of the mould pieces cut from the expelled mineral wool string or indirectly by more or less continuously determining some property of the material which is closely correlated to the density. One important such property is the resistance against deformation offered by the ready product. The resistance can be determined by having a pressurized roll or tongue roll and move respectively over the surface of the mould piece while pressing the mineral wool string forward in the channel or after the string has left the mouth of the channel, whereupon the impression obtained from the roll or the tongue respectively is measured and registered. An impression which is greater than the intended one thereby is an indication of increasing the convergency of the channel which leads to an increased density and thereby a reduced impression. Another possibility of controlling the density of the product is to measure the damping factor of an ultra sound ray which is directed to or passes through a string of mineral wool. Correspondingly $\beta$-radiation can be used. A further possibility is to measure the permeability which is highly correlated to the density. In all cases should be considered the displacement of time on one hand between the time of measuring the density or the material property correlated to the density and on the other hand the prior time when the density was determined at the converging portion of the channel.

In order to reduce this distance which is called the control distance the property correlated to the density should be measured as early as possible preferably just after the output of the converging portion and before the point where the binder is hardened.

In executing the invention it is very advantageous to use a heat curing or dried binder which can be hardened by heating the channel in that the heat is transferred through the channel walls and is transmitted to the compressed mineral wool string in the channel. Still more advantageous is, however, to provide through holes on opposite sides of the channel walls and to press heated gases like combustion gases through said holes and through the mineral wool string in the channel. If a heat curing binder is used like a binder of phenolic resin only small amounts of damp are evaporated, and it is thereby possible to use a reciprocating heater gas. Before introducing the gas into the channel and after the gas leaves the channel an amount of heat corresponding to the heat losses is added to the reciprocating gas. The admixture of heat to the reciprocating gas can be made by heat batteries, preferably electrically heated batteries mounted adjacent the channel. It is possible to combine the heating of the reciprocating gas with a catalytic combustion of impurities expelled from the binder. In such case a continuous supply of oxygene is necessary which can easily be provided by draining some part of the reciprocating gas and adding fresh air. Only some small part of the reciprocating gas needs to be drained, and the equipment may generally work in a closed process.

In operation a mould piece having the same cross-section form as the channel is expelled from the channel following the movement of the piston. After the heating of the mould piece a substantial amount of heat is maintained in the expelled mould piece. The said amount of heat must in one way or another be cooled, but it is to be preferred to make use of said heat in some way. A particularly suitable way is to use the said heat to dry a surface covering which is sprayed onto the mould piece after it is expelled from the channel. The continuous feeding of mould pieces out of the channel also offers very good possibilities of providing any type of surface covering. Consequently a surface covering strip may in screw form be applied on the surface of the mould piece at the same time as the mould piece leaves the channel. Also longitudinally extending strips can be applied along the mould piece. Such strips can be applied by being fed through slots in the channel wall before the mould piece is expelled from the channel. In such case the application of strips will follow fully automatically without any supplementary equipment.

When the flocks are compressed in the channel they are flattened so that they have the widest extension perpendicularly to the longitudinal axis of the channel. Due to said transversally directed fibre extension the mould piece is weakened so that it can easily be broken, since the intermeshing between different flocks are substantially less than the intermeshing of particles within the separate flocks. In those cases where breaking brittleness is disadvantageous the above mentioned surface covering may be a good remedy. In some cases it may be sufficient to use a surface covering which does not cover the entire outer surface, and only narrow strips of some tension stiff foil is applied in the axial direction of the mould piece. In some cases, however, it is both possible and preferable to introduce some type of reinforcement already in connection to the compression of the mineral wool. For example wires or reinforcement strips, preferably allowing penetration of air, are fed through axial bores in the piston. Thereby the reinforcement strips or the reinforcement wires are embedded in the mineral wool string. There are no difficulties to choose such reinforcement means as not to influence the hardening of the binder. The reinforcement means can also be introduced through slots in the channel walls so as to stick to the outer surface of the mineral wool string advanced through the channel by means of the binder in the mineral wool. The reinforcement means of course must be introduced in the channel in front of the position where the binder is hardened.

At the place where the mould piece is expelled from the channel there are good possibilities of providing other treatment than the surface covering treatment since the mould piece is kept steadily in the mouth of the channel and is fed by the action of the piston. For instance the mould piece can be treated by being slotted what is necessary when manufacturing pipe jackets which have to be opened in order to move the jacket over the pipe to be insulated. It is hereby also possible to provide such longitudinal cavities which are difficult to provide by a special formation of the channel.

When manufacturing pipe jackets the channel is annular having circular cross-section. Both in such cases and in other cases when the ready mould piece or mould body shall have one or more axial bores one or more cores can be introduced in the channel. Also the piston must have a corresponding bore since the cores must be mounted at the rear side of the piston and behind the rear end position thereof. Especially when several cores are provided in the channel it is advantageous if the channel is vertical and the mineral wool is pressed downwards in the channel. Even if no cores are used it is advantageous to provide the channel vertical since the feeding of the flocks into the channel is in such case simplified. Such mounting of the channel is, however, not necessary, but it is especially preferred in the case that one or more very thin cores are provided in the channel. Still it may happen that the cores, especially at the point opposite the mounting point tend to bow out from the intended position in the channel. It can thereby be necessary, to attach the core also at a point outside the outlet mouth of the channel. The mould piece expelled from the channel which is thereby guided by the core or the cores has to be slotted and bent out to get free from the attachment point of the core.

The continuous manufacture of mould pieces according to the invention like in any other continuous processes is especially advantageous in that products of different lengths can be manufactured. Generally, however, it is a question of making a large number of mould pieces having the same length. When executing the invention it is thereby advantageous to cut the mould pieces in connection to the manufacture of the mineral wool string and also to cut the pieces automatically. By the reciprocating movements of the piston or the rotating movements of the feeder screw the mould piece is expelled at the output mouth of the channel to an end position which is not necessarily the same as the intended point of cutting the mould piece. Therefore the cutting apparatus should be movable along the expelled mould piece and it can preferably be of the kind which comprises a stop means adapted to be actuated by the outer end of the mould piece. The mould piece is cut at a predetermined distance from the said stop means and thereby the apparatus gives a guarantee that all mould pieces are cut to one and the same length. If the distance between the cutting apparatus and the stop is adjustable the lengths of the cutted mould pieces can easily be adjusted.

An apparatus for manufacturing of mold pieces of inorganic fibres is known from the French patent 1,073,587. In the said apparatus organic fibres are supplied to a funnel shaped inlet and the fibres are pressed towards the bottom of said funnel shaped inlet by means of a piston and are forced through a screw formed channel by means of a rotatable central mandrel and the string of compressed mineral fibres formed in the screw channel is dryed and cooled may subsequently be supplied with a binder.

In the said previously known apparatus the mineral fibres are supplied directly to the inlet of the forming channel. It has however proved, that groups of fibres tend to bake together thereby forming lumps which do not become quite connected to or integral with each other during the forming of the mold piece. Also the apparatus comprises a press piston which does not press the fibres as far as into or through the forming channel but the mould piece is moved through the channel by the screw action. Depending on the rotary movement of the mould piece formed in the channel only circular mould pieces can be manufactured.

Accordingly the present invention relates to a process and an apparatus for manufacturing of mould pieces in which a mat of mineral wool is used as a starting material, in which the said mat is split up into flocks and/or granules which are impregnated or mixed with a binder and which are maintained flowing in the air and are collected in a chamber, from which the said flocks and/or granules are moved to the inlet of a forming chamber and are pressed into and through the said forming chamber by compressing means.

The apparatus of the invention comprises in combination:

a) a means for impregnating or mixing a mat of mineral wool with a binder;

b) a means for braking up the impregnated mineral wool mat into flocks and/or granules. Such flock making means may comprise one slowly and one rapidly rotating brush roller, which roller are provided parallelly with each other at a slight distance from each other or in direct contact with each other. Between the said brush rollers the mat of mineral wool impregnated with the binder is introduced. Depending on the different speeds of the brush rollers the mat of mineral wool is split up into several small flocks which by the action of the quickly rotating brush rollers are thrown out so as to flow freely in the air;

c) a means for advancing the flocks and/or granules thereby provided;

d) a feeding chamber in which the flocks and/or granules of mineral wool are collected;

e) one or more formation channels each having a cross section area which is less than that of the feeding chamber and the cross section area of which corresponds to the cross section area of the mold piece to be manufactured. In many cases it is advantageous that the said formation channels are provided vertically downwards and are connected to the bottom of the feeding chamber;

f) a means for providing a flow of air, or one or more reciprocatable feeders, for introducing the flocks and/or granules to the inlet of said formation channel or channels. It is also possible to use a chain having dog followers which are movable at the bottom of a groove into which the flocked mineral wool is thrown. The conveyor moves the flocked mineral wool in the feeding chamber to the inlet of the formation channel. Before introducing the flocks into the feeding chamber they may pass a granulating equipment for instance comprising a horizontal for preferably slightly bevelled perforated drum. When using a bevelled drum the flocks are introduced at the upper end of the drum, whereupon the flocks roll on the inner surface of the drum and are by time nodulated or granulated. In this connection the non-fibred particles so called pearls, which are still present in the mineral wool can to a great extent be separated through the perforation of the drum and are collected underneath the drum. From the opposite end of the drum the flocks now transformed to granules are fed into the feeding chamber by a similar conveyor;

g) for each channel a compressing means like a piston adapted to feed and compress the flocks and/or granules in the formation channel providing a string of mineral wool. The compressing means may be a double acting hydraulic or pneumatic cylinder providing a reciprocating movement, so that at one position the piston is located inside the channel and in the opposite position is located in the feeding chamber, 1 whereby there is a space between the inlet opening of the channel and the end of the piston facing the formation channel. The piston has a cross-section which substantially corresponds to that of the channel. It is, however, advantageous that the cross-section of the piston is less than that of the channel, and it is likewise advantageous that the bottom of the surface of the piston facing the channel is rounded at the edge meeting the piston sides;

h) a means for providing a hardening of the binder of the string or strings of mineral wool. Preferably the said means is a directly or indirectly acting heating apparatus.

At the feeding end of the formation channel the channels walls may be provided with through bores, through which air is drained. The said bores should not be provided further down in the channel than the action area of the compressing piston.

It is advantageous if the air drained from the channel by the suction fan or at least some portion thereof is not directly introduced into the feeding chamber but is guided to the apparatus for making flocks or to a granulating apparatus if such apparatus is provided. The circulating air thereby assists in feeding flocks or granules from the apparatus for making flocks and granules respectively to the feeding chamber and from there into the channel or channels. If sufficient amounts of air in this way is guided back to the apparatus for making flocks and granules respectively the transportation therebetween and from there may follow completely pneumatically.

The feeding of flocks and/or granules from the feeding chamber downwards or into the channel can alternatively be made by a reciprocatable feeder or by feeder screws. The said feeding apparatus may cooperate with a means for pneumatically sucking flocks or granules into the channel. Reciprocatable feeders are preferably actuated by pneumatic or hydraulic cylinders. Generally the same working fluid is used as for the compression piston. It is thereby easy to synchronize the apparatus so that the feeders are located in their most extended position at the same moment as the compression piston is in the end position opposed the position in the channel. The piston is provided with one or several axial bores or receiving one or several cores provided in the channel. Behind the end position of the piston spaced from the channel a fixture for the core or cores is mounted.

For controlling the degree of compression of the mineral wool in the channel bores may be provided in the channel walls in front of the working area of the piston and provided in the longitudinal direction and evenly distributed round the periphery of the channel. The bores are to the greatest extent covered by tongues provided substantially in the axial direction of the channel and the end of which adjacent the feeding end of the channel is mounted in the channel wall whereas the opposite end of the tongue is movable between two extreme positions, one position corresponding to the position of the channel wall and the other position being some distance in the channel spaced from the channel wall. The tongues ought to cover the largest portion of the periphery of the channel. The movable ends of the tongues can be supported from outside by screws or hydraulic cylinders which thereby define the position taken by the tongue in relation to the channel wall since the mineral wool which is present in the channel tends to press the tongue radially outwards from the said second position. In order to give a flexible control the screws can be actuated by a servo mechanism which is actuated by a common guide unit like the hydraulic cylinders if the control apparatus for the tongues comprises such cylinders.

The invention shall now be described in more detail with reference to the accompanying drawings. It is however to be understood that the described embodiments illustrated in the drawings are only illustrating examples and that all kinds of different modifications may be presented within the scope of the appended claims.

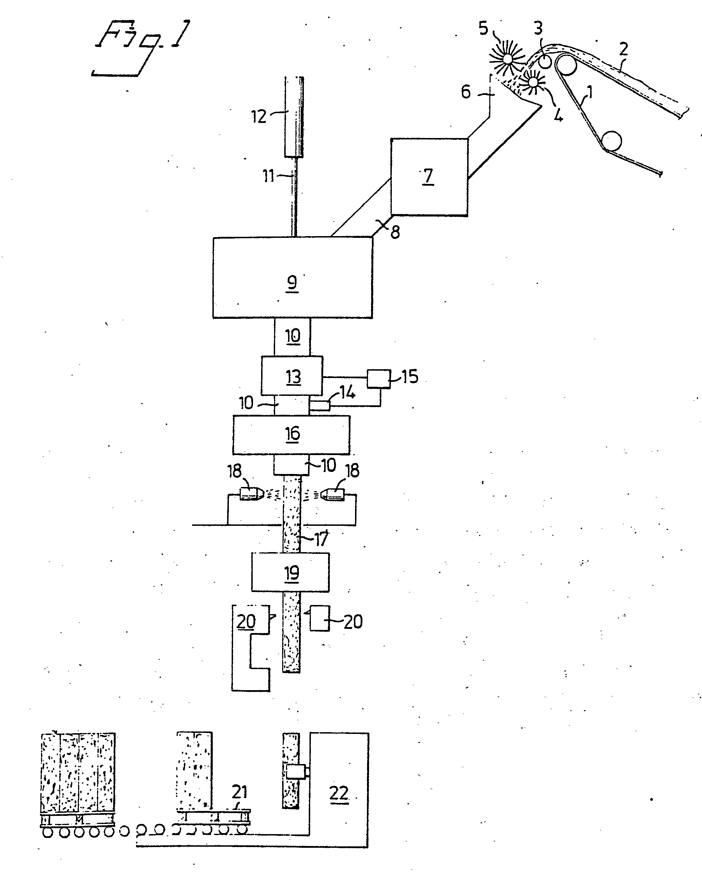

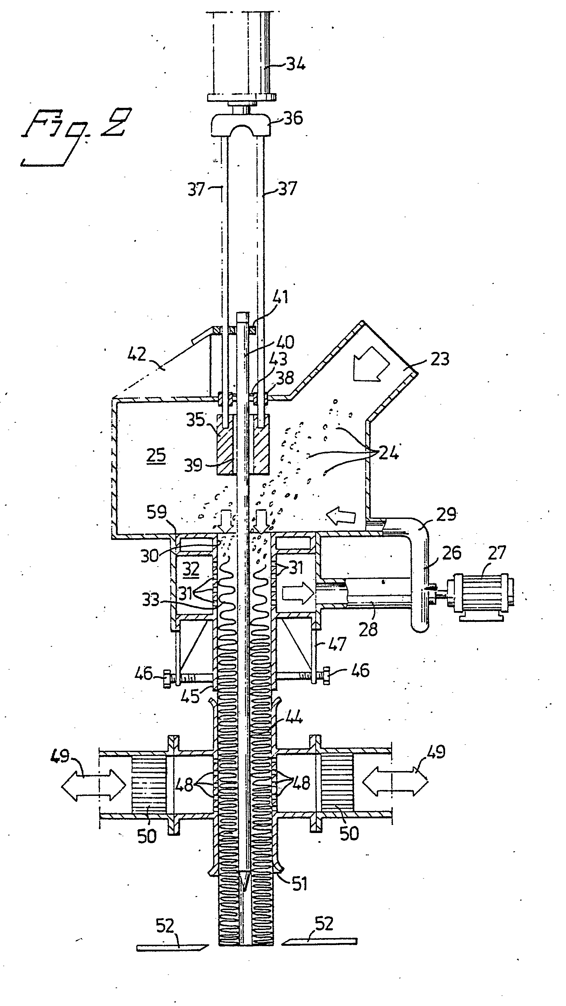

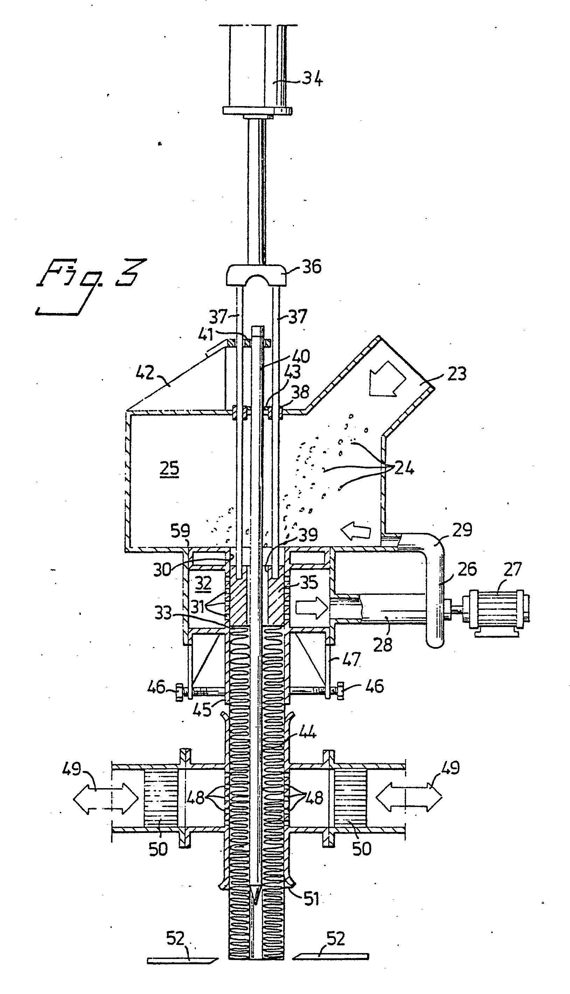

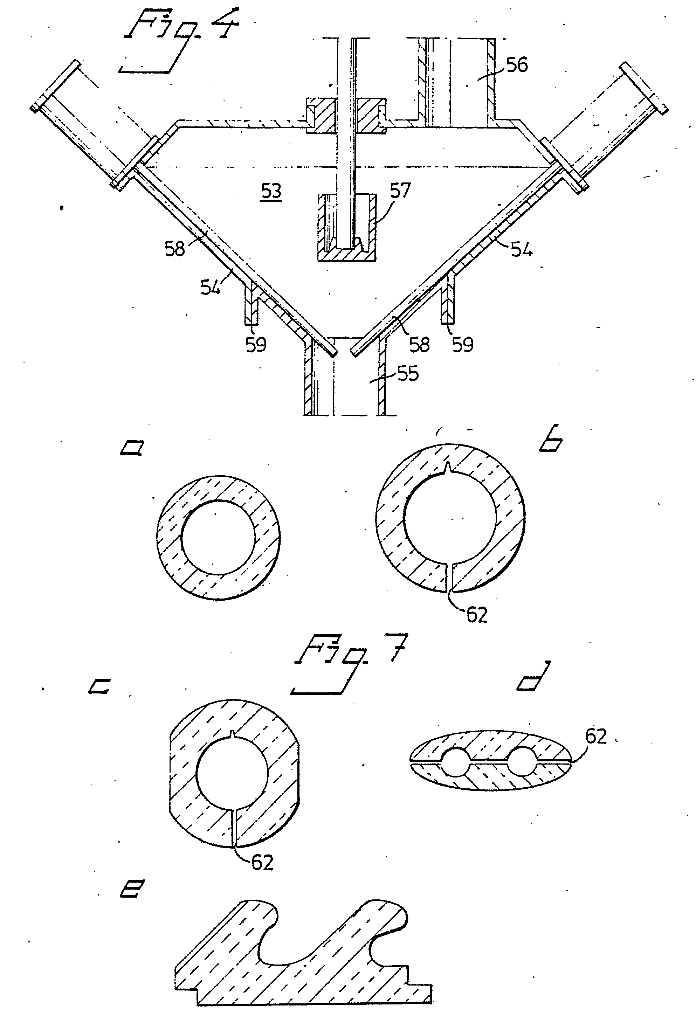

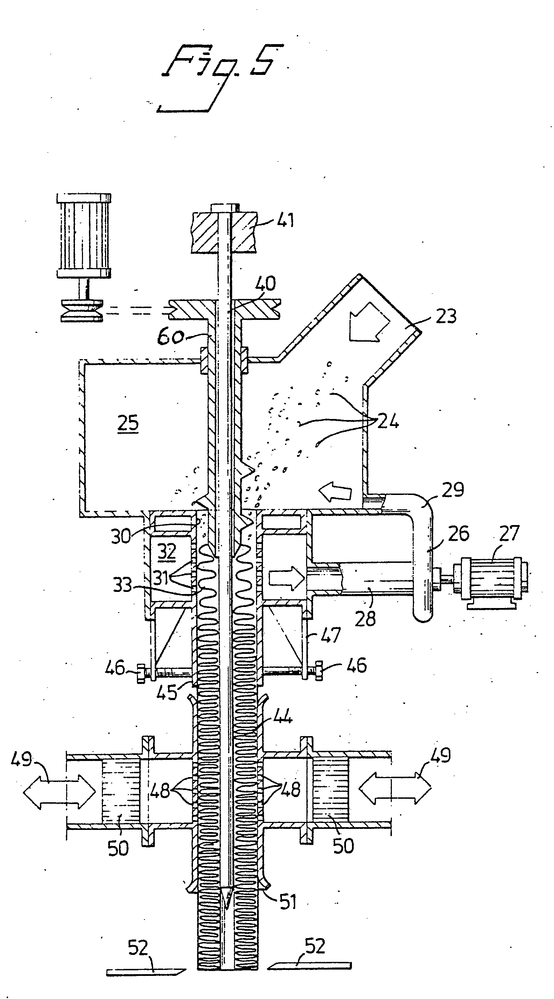

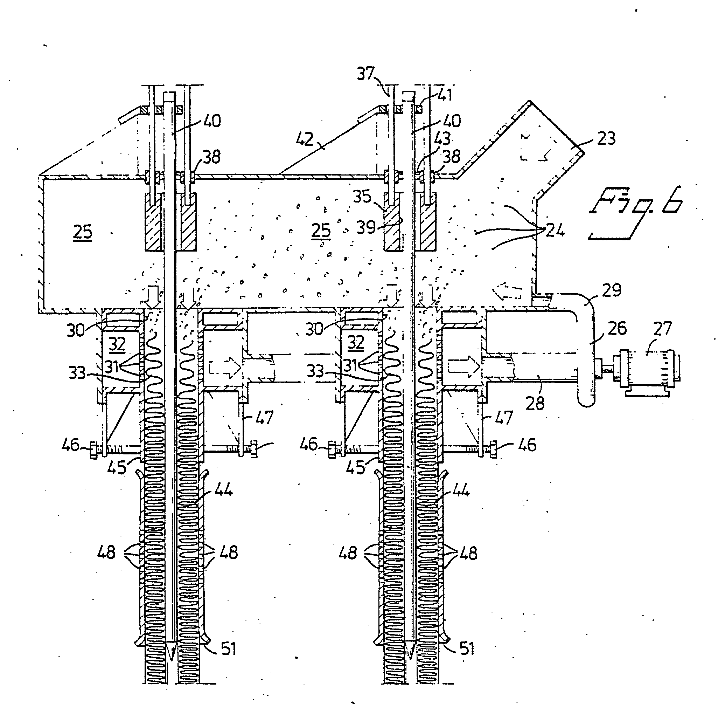

In the drawings Figure 1 diagrammatically shows a plant for executing the method according to the invention. Figure 2 shows a cross-section through the most essential parts of the plant illustrated in Figure 1 and having a compressing means in the form of a cylinder illustrated at one end position. Correspondingly Figure 3 illustrates the apparatus according to Figure 2 with the compressing means in the opposite end position. Figure 4 shows an apparatus for feeding flocks or granules into the treatment channel in the apparatus illustrated in Figures 1—3. Figure 5 is a view similar to Figures 2 and 3 illustrating an apparatus in which the compressing means is a rotatable screw. Figure 6 illustrates in the same way as in Figure 2 a twin plant having to apparatus for treating the mineral wool and connected to a common feeding chamber for flocks or granules. Figures 7a—e illustrate some different types of mould pieces of mineral wool which can be manufactured by the method and the apparatus according to the invention.

As mentioned above Figure 1 diagrammatically illustrates how a plant according to the invention can be arranged. On the conveyor 1 a path of mineral wool is transported in which binder is not yet distributed. Over the guide roller 3 the mineral wool path is transferred to a brush roller 4 which rotates in counter clockwise direction with the same or slightly higher peripheral speed than the speed of the conveyor 1. Against the mineral wool thereby transferred to the brush roller 4 acts another brush roller 5 rotating in clockwise direction. The brush roller 5 rotates with much higher speed than the brush roller 4. The mineral wool path is thereby torn into flocks which are thrown down into the funnel 6 which guides the flocks into a granulating mill 7 in which the flocks are nodulized or granulated.

The granulated flocks are moved by the conveyor 8 into the feeding chamber 9, at which the entrance end of the channel 10 is connected. The flocks or granules drop down or are fed into the channel 10 and are compressed and are brought further into the channel by a compressing means which in this case is a piston mounted at the bottom end of a piston rod 11 actuated by the cylinder 12.

Underneath the working area of the piston in the channel 10 there is an apparatus 13 for controlling the degree of compression of the string of mineral wool pressed forward by the piston. At 14 the density is measured by determining the permeability in that a flow of air of constant pressure is pressed into the mineral wool and the flow of air is measured. The flow of air which is pressed into the mineral wool body is proportional to the permeability and is inversally related to the density, and the value thereof is fed in the form of an electric or pneumatic control signal into a control unit 15 which guides the apparatus 13 for controlling the degree of compression.

The channel 10 further extends through a hardening apparatus 16 in which the string of mineral wool together with the binder distributed therein advanced in the channel is heated so that the binder is hardened.

The mineral wool body 17 which is now form stiff is thereafter expelled from the channel and when leaving the channel a surface treatment agent is sprayed onto the body 17 by the spray nozzles 18. The surface treatment agent is dried in a drying apparatus 19 whereupon the continuous body or mould piece 17 is cut by the cutting apparatus 20 and is piled on pallets 21 by means of a piling apparatus 22.

Figure 2 is a cross-section through the central portions of the apparatus according to Figure 1. Through the opening 23 flocks or granules 24 of mineral wool having a binder which is not yet hardened are fed into the feeding chamber 25 from a conveyor which is not illustrated in the drawing.

A fan 26 which is driven by a motor 27 provides a flow of air entering the channel 30 by means of a suction pipe 28 and an exhaust pipe 29. The flow of air is over the bores 31 from the channel 30 out into the surrounding suction chamber 32 and from there over the suction pipe 28 back to the fan 26. The flow of air which is consequently circulated brings flocks or granules 24 from the bottom portion of the feeding chamber 25 into the channel 30 in which they are separated from the flow of air when the air leaves through the bores 31. The flocks and granules are kept in the channel 30 thereby providing a relatively loose collection 33 of mineral wool.

Actuated by the double acting cylinder 34 which is only partly illustrated in Figure 2 the piston 35 is movable up and down. The cylinder 34 actuates the piston 35 over the yoke 36 and the piston rods 37. In Figure 2 the piston 35 is illustrated in its upper position adjacent the upper part of the feeding chamber 25. The piston rods 37 extend through bearings 38 in the upper part of the feeding chamber 25.

The piston 35 has an axial bore 39 through which a core 40 extends. The core 40 is carried by the support 41, which in turn is supported by the bracket 42. The core 40 is sealed against the upper side of the feeding chamber 25 by the bushing 43.

When the piston 35 actuated by the cylinder 34 moves downwards and into the channel 30 it compresses the loose collection of mineral wool 33 which has been sucked into the channel. The pressure from the piston is transmitted further into the mineral wool and forces the mineral wool string 44 which is present in the channel a distance forward which is dependent from the amount of mineral wool sucked into the channel between the piston strokes and the compression degree thereof.

The compression degree is controlled by several tongues 45 which form the main portion of the periphery of the channel and at the upper part are integral with the channel wall. By means of the screws 46 the lower ends of the tongues can be pressed radially inwards against the string of mineral wool 44 thereby making the channel partially converging. The degree of convergency is defined by the resistance from the channel walls against the advancing of the string of mineral wool. When adjusting the screws 46 they are moved in relation to the brackets 47, which are fixed mounted in relation to the channel.

After the string of mineral wool has passed the tongues 45 the string is pressed through a portion of the channel which is perforated by bores 48 on opposite sides of the channel. Through the said bores and through the mineral wool a reciprocating air flow is pressed as indicated by the arrows 49. The movements of the air flow are provided by a bellow or piston apparatus which is not illustrated in the drawing. Before the air enters the channel or leaves the channel it is forced through heat batteries 50 which may contain a catalyst for facilitating possible expulsion of binding agents from the mineral wool.

After the outlet opening 51 a cutting apparatus is provided which in the drawing is diagrammatically illustrated by two knives 52.

Figure 3 shows the same apparatus as Figure 2 but with the difference that the piston 35 is in the latter case illustrated in its lowest position.

Figure 4 shows another embodiment for feeding flocks or granules into the channel. The feeding chamber 53 is formed with a downwards-inwards sloping bottom 54 which is sloping down to the inlet mouth 55 of the channel. At the upper part of the feeding chamber 53 the supply pipe 56 for flocks or granules opens. In the chamber also a piston 57 is provided, and the piston is movable down into the channel and can be retracted therefrom into the feeding chamber. Along the bottom 54 movable pistons 54 are provided which in extracted state reach as far as to or even into the channel 55 as illustrated in the drawing.

In Figure 4 like in Figure 2 joints 59 are illustrated along which the channel and belonging connection means can be removed from the remaining part of the apparatus and can be substituted by a corresponding apparatus for manufacture of other mould pieces, for instance mould pieces of other dimensions and/or having other cross-section form.

Figure 5 illustrates an apparatus which mainly corresponds to the apparatus illustrated in Figures 2 and 3 but in which the compressing means is formed as a vertical hollow screw 60 extending some distance down into the channel 30 and which by the screw flanges catch flocks or granules and press them down into the channel. For providing the intended compression the screw 60 can be made conical, and the entrance portion of the channel 30 can be made correspondingly conical.

In Figure 6 is illustrated a twin apparatus in which two channels for compressing and hardening the mineral wool are connected to a common feeding chamber 25.

In Figures 7a—e are illustrated examples of different cross-section forms for mould pieces which can be manufactured by utilizing the invention. Figure 7a shows a hollow cylinder which can be used directly as an insert for a sound damper or which can be used as a pipe jacket preferably after having been slit up. The slitting up is made superfluous if, as illustrated in Figure 7b, an adequate axial slot is provided through the cross-section of the mould piece already at the manufacture of the said mould piece.

Figure 7c shows a pipe jacket for a special purpose in which the cross-section is flattened in order to make a more tight mounting of the isolated pipes possible.

Figure 7d shows a cross-section form for a moulded mineral body useful for insulating two pipes at the same time. The mould piece in this figure comprises two identical halves which can be manufactured separately or by slitting apart a mould body formed as a double unit.

In Figure 7e finally is illustrated an example of a completely different type of mould body, viz. an element for covering a wall by so called baffles which with a suitable form of the baffles gives extremely good sound absorbing properties.

## Claims

1. Process for continuously manufacturing mould pieces of mineral wool having a substantially constant cross-section along the entire length thereof, characterized in

that a mat of mineral wool impregnated or mixed with a binder and used as a starting material in the process is broken up (by 4, 5) into flocks granules,

that the flocks or granules of mineral wool are maintained substantially free flowing in the air,

that the shaping of the mineral wool and the hardening of the binder follows in a channel (10; 30), at one end of which the flocks or granules of mineral wool including the non-hardened binder are introduced, in that the flocks or granules of mineral wool are sucked into the channel (10; 30) by means of a flow of air, or in that the flocks or granules of mineral wool are supplied to the feeding end (55) of the channel (10; 30) and within the compression area of a compressing means (11; 35; 60) by one or more reciprocatable feeders (58) acting at an angle to the axial direction of the compressing means (11; 35; 60),

that the flocks or granules are compressed while being successively advanced in the channel (10; 30) by compressing means (11; 35; 60),

that the binder of the compressed string of mineral wool provided in the channel (10; 30) is hardened, and

that the ready string of mineral wool is expelled and is cut and finished into mould pieces.

2. Process according to claim 1, characterized in that the flocks or granules of mineral wool are sucked into the channel (10; 30) by means of a circulating flow of air.

3. Process according to claim 1, characterized in that the density of the compressed string of mineral wool is controlled by means of a portion (45) of the channel (30) by adjusting the convergency of said portion of the channel.

4. Process according to claim 1 or 2, characterized in that the convergency of the channel (30) may be adjusted, and in that the convergency of the channel is controlled automatically in that the density or any property of the mineral wool which is closely related to the density, for instance the resistance against deformation, is measured (by 14), the result of the measurement is fed into a control unit (15) and is compared with a predetermined value, whereupon a difference between the actual value and the predetermined value is utilized for providing a pulse for changing the adjustment of the convergency of the channel.

5. Process according to any of the preceding claims, characterized in that the binder for the mineral wool is a heat curing or heat drying binder and in that the curing or drying is provided by means of a flow of heated gas which is pressed through the walls (48) of the channel and through the compressed string of mineral wool.

6. Process according to any of the preceding claims, characterized in that the mould piece formed in the channel (30) is provided with a surface layer.

7. Process according to any of the preceding claims, characterized in that the channel (30) is formed by a pipe having one or several cores (40) provided axially in the pipe so as to extend at least from the feeding end of the pipe and past the apparatus (19; 48—50) for hardening the binder of the mineral wool.

8. Apparatus for executing the method according to any of the preceding claims for manufacturing of mould pieces of mineral wool fixed by a binder and having a substantially constant cross-section along the entire length thereof, characterized in that the apparatus comprises in combination:

a) means for impregnating or mixing a mat of mineral wool with a binder,

b) means (4, 5, 7) for breaking up the impregnated mineral wool mat into flocks and/or granules,

c) means (B) for advancing the flocks or granules thereby provided,

d) feeding chamber (9) in which the flocks or granules of mineral wool are collected,

e) one or more formation channels (10) each having a cross-section area which is less than that of the feeding chamber (9) and which corresponds to the cross-section form of the mould piece (17) to be manufactured,

f) compressing means (11; 35; 60) adapted to feed and compress the flocks or granules of mineral wool in the formation channel or channels (10) providing one or more strings (17) of mineral wool,

g) means for providing a flow of air, or one or more reciprocatable feeders (58) acting at an angle to the axial direction of the compressing means (11; 35; 60), and

h) means (16) for providing a hardening of the binder in the string or strings (17) of mineral wool.

9. Apparatus according to claim 9, characterized in that the formation channel (10; 30) is connected to a suction fan (26) or a corresponding means which sucks air from the feeding chamber (9; 25) over a conduit (29) from the pressure side of the suction fan (26) and provided so as to keep the flocks or granules of mineral wool moving in the feeding chamber.

10. Apparatus according to claim 9 or 10, characterized in that the walls of the formation channel (30) at an area succeeding the working area of the compressing means (11; 35; 60) are formed with axial through slots providing in between said slots axial tongues (45) which with their ends adjacent the working area of the compressing means are integral with the channel walls and with their opposite ends are free and can be adjusted from a position on line with the wall of the channel and gradually inwards to the center of the channel by means of screws (46) or hydraulic cylinders actuated by a common guide unit the activity of which is intern controlled by a control unit which is actuated by a predetermined signal which is proportional to the density of the string of the mineral wool (44) advanced in the channel or any other property which is closely related to the density of the mineral wool.

## Patentansprüche

1. Verfahren für die kontinuierliche Fertigung von über ihre gesamte Länge einen im wesentlichen konstanten Querschnitt aufweisenden Formstücken aus Mineralwolle, dadurch gekennzeichnet, daß eine mit einem Bindemittel getränkte oder versetzte Matte aus Mineralwolle, welche das Ausgangsmaterial des Verfahrens darstellt, zu Flocken oder zu einem Granulat aufgelöst wird (s. 4, 5), daß die Flocken oder das Granulat aus der Mineralwolle im wesentlichen frei fließend in der Luft gehalten werden bzw. wird, daß die Formung der Mineralwolle und die Härtung des Bindemittels in einem Kanal (10; 30) erfolgt, an dessen einem Ende die das nicht gehärtete Bindemittel enthaltenden Flocken oder Partikel der Mineralwolle eingeführt werden, indem sie mittels eines Luftstroms in den Kanal (10; 30) eingesaugt werden oder indem sie mittels eines oder mehrerer in einem Winkel zur Axialrichtung einer Preßvorrichtung (11; 35; 60) arbeitender, vor- und rückwärts bewegbarer Zubringer (58) dem Eintragsende (55) des Kanals (10; 30) und damit dem Wirkbereich der Preßvorrichtung (11; 35; 60) zugeführt werden, daß die Flocken oder Partikel unter fortlaufendem Vorschub in dem Kanal (10; 30) mittels der Preßvorrichtung (11; 35; 60) komprimiert werden, daß das Bindemittel des in dem Kanal (10; 30) gebildeten Stranges aus komprimierter Mineralwolle gehärtet wird und daß der fertige Strang aus Mineralwolle ausgestoßen und zu Formstücken zerschnitten und abgerichtet wird.

2. Verfahren nach Anspruch 1, dadurch gekennzeichnet, daß die Flocken oder Partikel aus Mineralwolle mittels eines umlaufenden Luftstroms in den Kanal (10; 30) eingesaugt werden.

3. Verfahren nach Anspruch 1, dadurch gekennzeichnet, daß die Dichte des komprimierten Strangs aus Mineralwolle mittels eines Abschnitts (45) des Kanals (30) gesteuert wird, indem die Konvergenz des betreffenden Abschnitts entsprechend eingestellt wird.

4. Verfahren nach Anspruch 1 oder 2, dadurch gekennzeichnet, daß die Konvergenz des Kanals (30) einstellbar ist und daß die Konvergenz des Kanals automatisch gesteuert wird, indem die Dichte oder eine in engem Zusammenhang mit der Dichte stehende Eigenschaft der Mineralwolle, z.B. der Widerstand gegen Verformung, gemessen wird (s. 14), das Ergebnis der Messung einer Steuereinheit (15) zugeführt und mit einem vorbestimmten Wert verglichen wird und die Differenz zwischen dem tatsächlichen Wert und dem vorbestimmten Wert zur Erzeugung eines Impulses zum Verstellen der Konvergenz des Kanals verwendet wird.

5. Verfahren nach einem der vorstehenden Ansprüche, dadurch gekennzeichnet, daß das Bindemittel für die Mineralwolle ein warm aushärtender oder warm trocknender Binder ist und daß das Aushärten oder Trocknen mittels eines erhitzten Gasstroms herbeigeführt wird, welcher durch die Wandungen (48) des Kanals und durch den komprimierten Strang aus Mineralwolle hindurchgepreßt wird.

6. Verfahren nach einem der vorstehenden Ansprüche, dadurch gekennzeichnet, daß das in dem Kanal (30) geformte Formstück mit einer Oberflächenschicht versehen wird.

7. Verfahren nach einem der vorstehenden Ansprüche, dadurch gekennzeichnet, daß der Kanal (30) durch ein Rohr gebildet ist, in welchem sich ein oder mehrere Kernelemente (40) in Axialrichtung wenigstens vom Eintragsende des Rohrs über die Vorrichtung (19; 48—50) zum Härten des Bindemittels der Mineralwolle hinaus erstrecken.

8. Vorrichtung zum Durchführen des Verfahrens nach einem der vorstehenden Ansprüche für die Herstellung von über ihre gesamte Länge im wesentlichen konstanten Querschnitt aufweisenden Formstücken aus mittels eines Bindemittels fixierter Mineralwolle, gekennzeichnet durch

a) eine Einrichtung zum Tränken oder Versetzen einer Matte aus Mineralwolle mit einem Bindemittel,

b) eine Einrichtung (4, 5, 7) zum Auflösen der getränkten Mineralwollmatte zu Flocken und/oder Partikeln,

c) Einrichtungen (B) für den Transport der dabei erhaltenen Flocken oder Partikel,

d) eine Eintragskammer (9) in welcher die Flocken oder Partikel aus Mineralwolle gesammelt werden,

e) einen oder mehrere Formkanäle (10), dessen bzw. deren Querschnittsfläche kleiner ist als die der Eintragskammer (9) und der Querschnittsform des herzustellenden Formstücks (17) entspricht,

f) eine Preßvorrichtung (11, 35, 60) zum Eintragen der Flocken oder Partikel aus Mineralwolle in den Formkanal oder die Formkanäle (10) und zum Komprimieren derselben zu einem oder mehreren Strängen (17) aus Mineralwolle,

g) Einrichtungen zum Erzeugen eines Luftstroms oder einen oder mehrere vor- und rückwärts bewegbare, in einem Winkel zur Axialrichtung der Preßvorrichtung (11; 35; 60) arbeitende Zubringer (58), und

h) Einrichtungen (16) zum Herbeiführen einer Härtung des Bindemittels in dem Strang oder den Strängen (17) aus Mineralwolle.

9. Vorrichtung nach Anspruch 9, dadurch gekennzeichnet, daß der Formkanal (10; 30) mit einem Sauggebläse (26) oder einer entsprechenden Einrichtung verbunden ist, welche über eine Leitung (29) von der Druckseite des Sauggebläses (26) Luft von der Eintragskammer (9) ansaugt und so angeordnet ist, daß die Flocken oder Partikel aus Mineralwolle in der Eintragskammer in Bewegung gehalten werden.

10. Vorrichtung nach Anspruch 9 oder 10, dadurch gekennzeichnet, daß die Wände des Formkanals (30) in einem auf den Arbeitsbereich der Preßvorrichtung (11; 35; 60) folgenden Bereich durch axiale Schlitze in sich in Axialrichtung erstreckende Zungen (45) unterteilt ist, welche an ihren dem Arbeitsbereich der Preßvorrichtung zugewandten Enden einstückig mit den Wänden des Kanals verbunden sind und deren gegenüberliegende, freie Enden mittels Schrauben (46) oder hydraulischer Zylinder aus einer mit den Wänden des Kanals fluchtenden Stellung stetig einwärts zur Mitte des Kanals verstellbar sind, wobei die Schrauben oder hydraulischen Zylinder mittels einer gemeinsamen Verstelleinheit betätigt werden, deren Wirkung ihrerseits durch eine Steuereinheit gesteuert ist, welche durch eine der Dichte des in dem Kanal vorgeschobenen Strangs aus der Mineralwolle (44) oder einer anderen, mit der Dichte der Mineralwolle in engem Zusammenhang stehenden Eigenschaft proportionales, vorbestimmtes Signal betätigt wird.

## Revendications

1. Procédé pour fabriquer en continu des pièces moulées en laine minérale ayant une section transversale sensiblement constante sur toute leur longueur, caractérisé en ce que:
— un matelas de laine minérale imprégné de liant ou mélangé à un liant est utilisé comme matière de départ dans le procédé est fragmenté (par 4, 5) en flocons ou granules;
— les flocons ou granules sont maintenus sensiblement en écoulement libre dans l'air;
— la mise en forme de la laine minérale et le durcissement du liant sont effectués ensuite dans un conduit (10; 30) à une extrémité duquel les flocons ou granules de laine minérale contenant le liant non durci sont introduits, les flocons ou granules de laine minérale étant aspirés dans le conduit (10; 30) au moyen d'un courant d'air ou les flocons ou granules de laine minérale étant fournis à l'extrémité d'alimentation (55) du conduit (10; 30) et à l'intérieur de la région de compression d'une moyen de compression (11; 35; 60) par un ou plusieurs alimentateurs (58) à mouvement alternatif agissant suivant une angle par rapport à la direction axiale du moyen de compression (11; 35; 60);
— les flocons ou granules sont comprimés pendant qu'ils sont successivement déplacés vers l'avant dans le conduit (10; 30) par le moyen de compression (11; 35; 60);
— le liant due cordon comprimé de laine minérale disposé dans le conduit (10; 30) est durci; et
— le cordon préparé de laine minérale est expulsé et est découpé et fini en pièces moulées.

2. Procédé selon la revendication 1, caractérisé en ce que les flocons ou granules de laine minérale sont aspirés dans le conduit (10; 30) au moyen d'un courant d'air en circulation.

3. Procédé selon la revendication 1, caractérisé en ce que la densité du cordon comprimé de laine minérale est commandée au moyen d'une partie (45) du conduit (30) en réglant la convergence de cette partie du conduit.

4. Procédé selon la revendication 1 ou 2, caractérisé en ce que la convergence du conduit peut être réglée et en ce que la convergence du conduit est commandée automatiquement du fait que la densité ou une quelconque propriété de la laine minérale qui est étroitement fonction de la densité, par exemple la résistance à la déformation, est mesuré (par 14), le résultat de la mesure est appliqué à une unité de commande (15) et est comparé à une valeur prédéterminée, à la suite de quoi une différence entre la valeur effective et la valeur prédéterminée est utilisée pour produire une impulsion pour modifier le réglage de la convergence du conduit.

5. Procédé selon l'une quelconque des revendications précédentes, caractérisé en ce que le liant pour la laine minérale est un liant thermodurcissable ou thermoséchable et en ce que le durcissement ou le séchage est produit au moyen d'un courant de gaz chauffé qui est refoulé à travers les parois (48) du conduit et à travers le cordon comprimé de laine minérale.

6. Procédé selon l'une quelconque des revendications précédentes, caractérisé en ce que la pièce moulée formée dans le conduit est munie d'une couche de surface.

7. Procédé selon l'une quelconque des revendications précédentes, caractérisé en ce que le conduit (30) est formé par un tuyau ayant un ou plusieurs noyaux (40) disposés axialement dans le tuyau de façon à s'étendre au moins à partir de l'extrémité d'alimentation du tuyau et au-delà de l'appareil (19; 48—50) servant à durcir le liant de la laine minérale.

8. Appareil pour la mise en oeuvre du procédé selon l'une quelconque des revendications précédentes pour fabriquer des pièces moulées en laine minérale fixées par un liant et ayant une section transversale sensiblement constante sur toute leur longuer, caractérisé en ce que l'appareil comprend, en combinaison:
a) un moyen pour imprégner un matelas de laine minérale d'une liant ou pour le mélanger à un liant;

b) un moyen (4, 5, 7) pour fragmenter le matelas de laine minérale imprégné en flocons et/ou granules;

c) un moyen (13) pour faire avancer les flocons ou granules ainsi produits;

d) une chambre d'alimentation (9) dans laquelle les flocons ou granules de laine minérale sont recueillis;

e) un ou plusieurs conduits de formage (10) ayant chacun une surface de section transversale qui est inférieure à celle de la chambre d'alimentation (9) et qui correspond à la forme en section transversale de la pièce moulée (17) à fabriquer;

f) un moyen de compression (11; 35; 60) agencé pour faire avancer et comprimer les flocons ou granules de laine minérale dans le conduit ou les conduits de formage (10), produisant un ou plusieurs cordons (17) de laine minérale;

g) un moyen pour produire un courant d'air ou un ou plusieurs alimentateurs (58) à mouvement alternatif agissant suivant un angle par rapport à la direction axiale du moyen de compression (11; 35; 60); et

h) un moyen (16) pour produire un durcissement du liant dans le cordon ou les cordons (17) de laine minérale.

9. Appareil selon la revendication 8, caractérisé en ce que le canal de formage (10; 30) est raccordé à un ventilateur aspirant (26) ou à un moyen correspondant qui aspire l'air à partir de la chambre d'alimentation (9; 25) provenant d'un conduit (29) du côté refoulement du ventilateur aspirant (26) et prévu de façon à maintenir les flocons ou granules de laine minérale en déplacement dans la chambre d'alimentation.

10. Appareil selon la revendication 8 ou 9, caractérisé en ce que les parois du conduit de formage (30) dans une zone qui suit la zone de travail du moyen de compression (11; 35; 60) sont formées avec des fentes traversantes axiales formant entre lesdites fentes des languettes axiales (45) qui, à leur extrémité adjacente à la zone de travail du moyen de compression, sont formées en une seule pièce avec les parois du conduit et dont les extrémités opposées sont libres et peuvent être réglées à partir d'une position alignée avec la paroi du conduit et progressivement vers l'intérieur en direction du centre du conduit au moyen de vis (46) ou de vérins hydrauliques actionnés par un dispositif de guidage commun dont l'actionnement est, à son tour, commandé par une unité de commande qui est actionnée par un signal prédéterminé qui est proportionnel à la densité du cordon de laine minérale (44) déplacé vers l'avant dans le conduit ou à une autre propriété quelconque qui est étroitement fonction de la densité de la laine minérale.

Fig.1

Fig. 2

*Fig. 3*

Fig. 4

53

56

57

58

54

54

58

59

55

59

a

b

62

Fig. 7

c

d

62

62

e

Fig. 5

Fig. 6